# EUROPEAN PATENT APPLICATION

(11) **EP 4 656 612 A1**
(43) Date of publication of application: **03.12.2025**
(21) Application number: 24178632.6
(22) Date of filing: 28.05.2024
(51) Int. Cl.: C04B 28/08, C04B 28/14

(54) **INORGANIC BINDER COMPOSITION COMPRISING LADLE FURNACE SLAG AND BASIC OXYGEN FURNACE SLAG**

(71) Applicant: ResourceFull BV, 3000 Leuven (BE)
(72) Inventor: DIQUELOU, Youen, B-4000 Liège (BE); ARNOUT, Lukas, B-3010 Kessel-Lo (BE); LAPAUW, Thomas, B-3010 Kessel-Lo (BE)
(74) Representative: IPLodge bv

(57) **Abstract**

The present invention suggests an inorganic binder composition comprising a ladle furnace slag, a CaSO₄-source, a retarding compound ad a basic oxygen furnace slag. Moreover, the present invention suggests a process for producing that inorganic binder composition and the use of that inorganic binder composition for producing a building product.

## Description

### Technical Field

The present invention relates to an inorganic binder composition comprising a ladle furnace slag, a CaSO₄-source, a retarding compound and a basic oxygen furnace slag. Moreover, the present invention relates to a process for producing that inorganic binder composition and to the use of that inorganic binder composition for producing a building product.

### Background Art

The use of CaO-Al₂O₃ phases (calcium aluminate phases, 'CA') as cement constituent is known in the state of the art and there is a wide range of commercial products available on the market. One of the typical features of these CA cement types is the fact that, when mixed with water, they can result in a fast setting and hardening binder, resulting in a high production speed and a high economic value.

The production of CA cement is done at high temperatures, usually above 1300°C, and it often involves the melting or sintering of the compounds.

The combination of CA cement with CaSO₄-based compounds is also often used for applications where low or no shrinkage is required. The proper dosage of the CA cement and CaSO₄-based compounds is used for applications where no shrinkage is tolerated and prevents the needed for i.e. extra reinforcement or shrinkage joints.

The use of CA-rich binders in cementitious systems has been widely reported and suggested in literature, as described for example in WO2020141379A1. With reference to ES2891675B2, it is clear that CA-rich binders such as ladle furnace slag (LFS) can have hydraulic properties which provide a certain mechanical strength and can be combined with ordinary Portland cement (OPC) and some blast furnace slag (BSF). However, the challenge is to form a durable and robust binder without loss in strength after a certain period of time [Cement and Concrete Research 41 (2011) 865-571].

The combination of a ladle furnace slag with activators has been explored in order to overcome this issue. The use of alkali-activators showed an improvement in strength [Construction and Building Materials 123 (2016) 800-805]. The use of ladle furnace slag in combination with CaSO₄ has been documented [Construction and Building Materials 197 (2019) 143-151; Construction and Building Materials 127 (2016) 93-101; WO2023090878A1]. This can result in a more durable binder based on ettringite. However, the challenge lies with the consistency of the reactivity with water and quality of the residue in order to obtain high quality binders and construction materials with sufficient mechanical performance in an acceptable bandwidth of tolerance.

One challenge is the dimensional stability of the formed binder. Severe shrinkage due to the absence of anions such as SO₄²⁻ is detrimental for the usage of binders based on these types of residues. On the other hand, the dosage should be tuned to the amount and type of reactive CA-phases otherwise uncontrollable expansion can occur [Construction and Building Materials 127 (2016) 93-101]. Moreover, the stability of the formed binder and building products are crucial parameters for most construction materials, in particular for outdoor usage.

Furthermore, the use of CA-rich binders has been used as binder component in alkali-activated materials, as described in EP4174045A1. The use in combination with CaSO₄ as activator has, however, explicitly been mentioned as not useful due to the potential risk of 'undesirable expansion'.

Also the use of convertor slag also known as basic oxygen furnace (BOF) slag has been reported as binding compound. In particular, it is listed as compound for hydraulic road binders in the EN 13282-2. This steelmaking slag however is often landfilled and is not as easy to use in the cement industry as ground granulated blast furnace slag (GGBFS). The presence of hydraulic calcium silicate and calcium ferrite phase in this type of slags provides potential for these residues to be used as an inorganic binder composition. Examples hereof are EP 4276084A1, where BOF slag is taken as part of the binder in combination amongst others with OPC, EP3941887, where BOF slag is used as main binder compound in combination with tripotassium citrate as activator and WO2022238376, which describes additives which accelerate the hydration and reactivity of BOF slag, and GGBFS.

### Problem statement

The use of CA cements known in the state of the art is limited due to the high costs and high ecological footprint that are associated with purity of the raw materials, the high Al₂O₃-content, higher energy consumption and higher production costs. Alternatives to CA cements have been sought.

BOF slags on the other hand are known to react slow, cause retardation of the OPC hydration and provide little strength in the first days of hardening. BOF slags are currently often landfilled or used in low value applications. Similar problems exist with ladle furnace slag. Due to the large size of steel batches, ladle furnace slag is poured out on the ground and allowed to cool down in the open. This results in substantial water and COz uptake by the slag. This results in very low hydraulic activities of the respective ladle furnace slags. Ladle furnace slag therefore is often landfilled. Alternatives to the landfilling of LFS and BOF have been sought.

Moreover the use of the in literature suggested binders based on ladle furnace slag combined with CaSO₄ is limited due to durability challenges in terms of dimensional stability and compatibility with steel reinforcement. The stability of certain hydration products such as ettringite is pH dependent and therefore these hydration products can become instable due to natural carbonation of the binder.

### Summary of the invention

According to a first aspect, the present invention provides an inorganic binder composition comprising: (A) a ladle furnace slag chemically comprising at least 25 wt% of CaO, at least 10 wt% of Al₂O₃, and a maximum of 25 wt% of SiOz, (B) a CaSO₄-source, different from (A), (C) a retarding compound, different from (A) and (B), (D) a basic oxygen furnace slag chemically comprising at least 25 wt% of CaO, 5 to 25 wt% of SiO₂, at least 10 wt% of iron oxide, calculated as Fe₂O₃, and a maximum of 10 wt% of Al₂O₃, different from (A), (B) and (C), wherein (A) the ladle furnace slag is at least 5 wt% of the inorganic binder composition, being the sum of (A)+ (B)+ (C) + (D), the weight ratio between (A) the ladle furnace slag and (B) the CaSO₄-source is in the range from 1:3 to 19:1, the weight ratio between the sum of the ladle furnace slag, the CaSO₄-source and the basic oxygen furnace slag ((A) + (B) + (D)) and the retarding compound (C) is at least 19:1, the basic oxygen furnace slag (D) is present as at least 10 wt% of the binder composition and at a maximum of 90 wt%.

This binder composition can be combined with water and optionally aggregates to form high quality and durable building materials and building products with good and reliable mechanical performance. Synergistically, the combination of LFS and BOF overcomes the slow reactivity of the BOF-based binders and improves the durability of the ettringite binder based on ladle furnace slag. These effects are mainly obtained by combining two secondary streams coming from the metallurgical industry. Therefore, the invented inorganic binder composition avoids the addition of primary raw materials such as OPC or CA cement, creates a binder composition with exceptional low ecological impact and reduces the amount of materials being landfilled.

In conclusion the presented invention describes an inorganic binder composition with sufficient open time, low ecological footprint, affordable, good flowability and workability, outstanding durability, good water stability and excellent mechanical strength at early and late age.

According to a second aspect, the invention provides a process for producing said inorganic binder composition, comprising the steps of providing a ladle furnace slag, providing a CaSO₄-source, providing a retarding compound, providing a basic oxygen furnace slag, providing water, homogeneously mixing the ladle furnace slag, the CaSO₄-source, the retarding compound, the basic oxygen furnace slag and water.

"Homogeneously mixing", as this term is used herein, means that the standard deviation on the composition calculated on at least 10 randomly taken bulk samples of the inorganic binder composition is maximum 10% relative to the mean value. Samples that are not properly mixed tend to have undesired fresh properties and yield weak building products.

According to a third aspect, the present invention provides for the use of that inorganic binder composition, comprising combining the binder composition with water and optionally aggregates to form a building product.

### Brief Description of the Drawings

Various technical effects and advantages of embodiments of the present invention will now be described with reference to the accompanying figures, in which:
- Figure 1 shows the compressive strength as a function of time for the mortar composition as provided for the examples and counter example in Table 5, "D" referring to the number of days' strength,
- Figure 2 shows the compressive strength as a function of time for the mortar composition as provided for the examples and counter example in Table 6, and
- Figure 3 shows the compressive strength as a function of time for the mortar composition as provided for the examples and counter example in Table 7.

### Detailed description of the invention

The present invention will be described with respect to particular embodiments and with reference to certain drawings, but the invention is not limited thereto but only by the claims.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purposes of the invention, the term "comprising" is intended to include the narrower term "consisting of", but not to be synonymous therewith. It is moreover intended that the sum of the percentages of the specified constituents of the composition of the invention is always 100% or can be adjusted to 100% in case of small errors.

For the purpose of the invention, the term "slag" refers herein to a waste material produced during the smelting or refining of metals, which typically occurs by reaction of a flux with impurities.

For the purpose of the invention, the term "cement" refers herein to a substance made for use in mortar or concrete. The term can refer to ordinary Portland cement (OPC). The term "alkali-activated cement" refers to an alternative for OPC, and typically refers to a binder comprising a precursor and an alkali activator.

For the purpose of the invention, the term "d_50" refers herein to a mass-median-diameter, considered to be the average particle size by mass; d_50 may be measured by experimental techniques such as laser diffraction.

For the purpose of the invention, the term "Binder" or "Inorganic binder composition" refers to a combination of materials that harden just by adding water, like OPC.

### Residues

An important aspect of the invention is the clear distinction between the various slags produced during iron- and steelmaking. All these slags have different chemistry and mineralogy and hence different hydraulic behaviour. The different slags which are encountered are clearly described below:
- Primarily, in the first stage of iron and steel making, iron ore and cokes are processed in the blast furnace. In this stage pig iron is made and the slag produced during the blast furnace operations is known as blast furnace slag (BFS). Commonly the BFS is granulated with water or air resulting in a significant amount of amorphous phases and little to no Ca-Al rich phases. Moreover, the chemistry of this slag is particular richer in SiO₂-content. The use of milled granulated BFS as supplementary cementitious material (SCM) is well-known in the field.
- In a second step, the iron is converted into steel. This can be done during a convertor process such as Linz-Donawitz (LD) steelmaking process or Gilchrist-Thomas-converter process. The slag produced during this LD-process, convertor slag, also known as basic oxygen furnace (BOF) slag. The term 'Steel slag' in literature refers mostly to the slag produced during these processes. In particular the convertor slags' chemistry has a lower Al₂O₃ -content which results in the absences of any Ca-Al rich phases, but a higher Fe-oxide content which results in the presence of Ca-Fe-phases.
- Thirdly, ladle furnace slag or ladle furnace slag (LFS) is slag coming from secondary processes. It is one of the so-called secondary metallurgical slags (SMS), which are generated during the production and refinement of specific alloys such as high-quality steels and stainless steels by secondary metallurgical processes. The steel processed in e.g. basic oxygen furnaces (BOFs) and electric arc furnaces is treated in a ladle furnace to achieve the required chemical composition and temperatures appropriate for casting. For this purpose, different processes are applied, thus generating different types of slag. (Euroslag, 2019). Ladle slag or ladle furnace slag is produced during the production of, amongst other metals and alloys, steel and stainless steel. This slag has in comparison to the previous two slags a high Al₂O₃ content
- Other type of slag is produced during the operations of the electric arc furnace (EAF) which is used to melt steel scrap or direct reduced iron (DRI) can be produced during the steelmaking operations. Similarly, theses EAF slags' chemistry and mineralogy are different than the ladle furnace slags used in this invention and therefore have a different reactivity.
- Another type of SMS is the slag produced during the Argon oxygen decarburization (AOD) process. This process is mainly used to purify stainless steel.

The invention is based on the surprising synergy between the basic oxygen furnace slag (BOF) and the ladle furnace slag.

The ladle furnace slag comprises, in terms of chemical composition, at least 25 wt% of CaO. Preferably, the ladle furnace slag comprises at least 30 wt% of CaO, more preferably at least 35 wt% of CaO.

The ladle furnace slag comprises, in terms of chemical composition, at least 10 wt% of Al₂O₃. Preferably, the ladle furnace slag comprises at least 15 wt% of Al₂O₃, more preferably at least 20 wt%.

Preferably, the combined fraction of CaO and Al₂O₃, in terms of chemical composition, is at least 40 wt%, preferably 50 wt%, more preferably 60 wt%.

The weight ratio of Al₂O₃/CaO is at least 0.25. Preferably the weight ratio of Al₂O₃/CaO is in the range from 0.25 to 4, more preferably from 0.3 to 3, even more preferably from 0.4 to 2, still more preferably from 0.5 to 1.

Preferably, the chemistry of the ladle furnace slag comprises iron oxides, preferably in the range from 1 wt% to 60 wt% calculated as Fe₂O₃. More preferably, the Fe₂O₃ in the ladle furnace slag is in the range from 5 wt% to 40 wt%. Preferably, the SiOz-content is less than 20 wt%, even more preferably less than 15 wt%.

It should be noted that the interest in this invention is towards the crystalline phases. Preferably, in terms of mineralogic composition, the ladle furnace slag comprises less than 70 wt% of amorphous content, more preferably less than 60 wt%, even more preferably less than 50 wt%, still more preferably less than 40 wt%, more preferably less than 30 wt%. Therefore, it is preferred that the amount of glassy, amorphous materials is limited. The mineralogic constituents are determined by X-ray diffraction (XRD) and quantified via the Rietveld refinement method.

Examples of the chemical composition of ladle furnace slag are shown in Table 1. The values of the chemical composition are determined by X-ray fluorescence (XRF).

Preferably, in terms of mineralogic composition, the sum of dicalcium-silicate phases (C2S-polymorphs) in the ladle furnace slag is comprised between 5 wt% and 35 wt%, more preferably between 15 wt% and 25 wt%.

The ladle furnace slag comprises at least one of the following CaO-Al₂O₃ mineralogic phases: C3A: 3CaO.Al₂O₃, C12A7: 12CaO.7Al₂O₃, CA: CaO.Al₂O₃, CA2: CaO.2Al₂O₃, CA6: Ca0.6AlzOs. Preferably, in terms of mineralogic composition, the sum of CaO-Al₂O₃ phases (3CaO.Al₂O₃, CaO.Al₂O₃, 12CaO.7Al₂O₃, CaO.2Al₂O₃, CaO.6 Al₂O₃) is more than 5 wt%, more preferably more than 15 wt%.

Preferably, the content of Mayenite (C12A7: 12Ca0.7AlzOs) in the ladle furnace slag is more than 5 wt%, more preferably more than 10 wt%.

Preferably, the content of hydrate CaO-Al₂O₃-containing phases in the ladle furnace slag, such as garnet i.e. katoite, is more than 5 wt%, more preferably is more than 10 wt%.

Preferably, the maximal metallic content in the ladle furnace slag is less than 5 wt%, more preferably less than 3 wt%, even more preferably less than 1 wt%. Some examples of mineral composition are shown in Table 2.

The BOF slag comprises, in terms of chemical composition, at least 25 wt% of CaO. Preferably, the BOF slag comprises at least 30 wt% of CaO, more preferably at least 35 wt% of CaO.

The BOF slag comprises, in terms of chemical composition, less than 10 wt% of Al₂O₃. Preferably, the BOF slag comprises less than 7.5 wt% of Al₂O₃, more preferably less than 5 wt% of Al₂O₃.

The BOF slag comprises, in terms of chemical composition, at least 5 wt% of SiOz, preferably at least 7.5 wt% of SiOz. More preferably, at least 10 wt% of SiOz.

The BOF slag comprises, in terms of chemical composition, less than 25 wt% of SiOz. Preferably, the BOF slag comprises less than 20 wt% of SiOz, more preferably less than 15 wt% of SiOz.

Preferably, the chemistry of the BOF slag comprises iron oxides, preferably at least 10 wt% of iron oxides expressed as Fe₂O₃, more preferably the BOF slag comprise at least 15 wt% of Fe₂O₃, even more preferably the BOF slag comprise at least 20 wt% of Fe₂O₃. Examples of the chemical composition of BOF slag are shown in Table 3.

Preferably, in terms of mineralogic composition, the BOF slag comprises less than 70 wt% of amorphous content, more preferably less than 60 wt%, even more preferably less than 50 wt%, still more preferably less than 40 wt%. Therefore, it is preferred that the amount of glassy, amorphous materials is limited. The mineralogic constituents are determined by X-ray diffraction (XRD) and quantified via the Rietveld refinement method.

Preferably, in terms of mineralogic composition, the BOF slag comprises dicalcium-silicate phases (C2S-polymorphs). Preferably the sum of dicalcium-silicate phases (C2S-polymorphs) in the BOF slag is at least 10 wt%, more preferably the sum of dicalcium-silicate phases (C2S-polymorphs) in the BOF slag is at least 15 wt%, even more preferably the sum of dicalcium-silicate phases (C2S-polymorphs) in the BOF slag is at least 20 wt%.

### Binder

As mentioned above, the present invention provides an inorganic binder composition comprising: (A) a ladle furnace slag chemically comprising at least 25 wt% of CaO, at least 10 wt% of Al₂O₃, and a maximum of 25 wt% of SiO₂, (B) a CaSO₄-source, different from (A), (C) a retarding compound, different from (A) and (B), (D) a basic oxygen furnace slag chemically comprising at least 25 wt% of CaO, 5 to 25 wt% of SiOz, at least 10 wt% of iron oxide, calculated as Fe₂O₃, and a maximum of 10 wt% of Al₂O₃, different from (A), (B) and (C), wherein (A) the ladle furnace slag is at least 5 wt% of the inorganic binder composition, being the sum of (A)+ (B)+ (C) + (D), the weight ratio between (A) the ladle furnace slag and (B) the CaSO₄-source is in the range from 1:3 to 19:1, the weight ratio between the sum of the ladle furnace slag, the CaSO₄-source and the basic oxygen furnace slag ((A) + (B) + (D)) and the retarding compound (C) is at least 19:1, the basic oxygen furnace slag (D) is present as at least 10 wt% of the binder composition and at a maximum of 90 wt%.

Of course, the constituents of the inorganic binder composition of the invention may be held available in separate portions, i.e. as a kit of parts. It is possible to store the ladle furnace slag (A) separately from the CaSO₄-source (B), the retarding compound (C) and the basic oxygen furnace slag (D), the latter ones being present separately or combined. Moreover, it is possible to store a mixture of the ladle furnace slag (A) with the CaSO₄-source (B), the retarders (C) and/or the basic oxygen furnace slag (D), and to store the missing part(s) of the composition in any combination or separately. All parts should be combined before use.

The ladle furnace slag has been described extensively in a previous section of the description. The ladle furnace slag should be at least 5 wt% of the inorganic binder composition, more preferably at least 10 wt%, even more preferably at least 15 wt%. Moreover, the ladle furnace slag preferably comprises less than 70 wt% of amorphous constituents.

Preferably, the ladle furnace slag is milled into a powder with a particle size distribution d_50 smaller than 50 µm. Preferably, the milling is performed prior to said combination with the CaSO₄-source, the retarder and the BOF slag. More preferably, the ladle furnace slag is milled into a powder with a particle size distribution d_50 smaller than 25 µm, more preferably smaller than 20 µm, more preferably smaller than 15 µm.

The ladle furnace slag is combined with a CaSO₄-source. Still more preferably, the CaSO₄-source comprises one or more of the following: CaSO₄ (anhydrite), alfa-CaSO₄.½H₂O (alfa hemi-hydrate), beta-CaSO₄.½H₂O (beta hemi-hydrate), CaSO₄.₂H₂O (gypsum), phosphogypsum, SOs-scrubber gypsum, a blend material containing CaO or Ca(OH)₂ and Na₂SO₄. The source of CaSO₄ can be natural or synthetic such as flue gas desulfurisation (FGD) gypsum.

The source of CaSO₄ is combined with the ladle furnace slag. The combination of ladle furnace slag and CaSO₄ with water results in the formation of an ettringite-based composition.

Preferably, the weight ratio between the said ladle furnace slag and said CaSO₄-source is in the range from 1:3 to 19:1, more preferably from 1:1 to 9:1, still more preferably from 2:1 to 5:1.

As mentioned before in the description, the ladle furnace slag is combined with a retarding compound, also called set retarder. More preferably, the ladle furnace slag is combined with a retarder after the residue has already been combined with the CaSO₄-source.

A retarder, set retarder or retarding compound is chosen from a list of, or is a combination of, conventional retarders for CA-cements such as a boron-containing salts, a carboxylic acid or a salt thereof, a sugar, an amine, alkali carbonates, a lignin-derivate, a phosphate or a phosphonate. Preferably, the boron-containing salt is borax.

More preferably, a carboxylic acid is based on citric acid, tartaric acid, maleic acid, oxalic acid, ethylenediamine tetraacetic acid (EDTA) or gluconic acid. Still preferably, the lignin-derivate is lignosulfonate.

The weight ratio between the sum of the ladle furnace slag, the CaSO₄-source and the BOF slag, on the one hand, and the retarding compound, on the other hand, is at least 19:1, preferably between 25:1 and 10000:1, more preferably between 50:1 and 5000:1, still preferably between 100:1 and 3000:1, preferably between 200:1 and 2000:1.

The BOF slag is present as at least 10 wt% of the inorganic binder composition, more preferably at least 20 wt% of the binder composition, and even more preferably at least 30 wt% of the binder composition.

The BOF slag in the inorganic binder composition is limited to 90 wt% of the binder composition, more preferably, it is limited to 80 wt% of the binder composition, even more preferably to 70 wt% of the binder composition.

It found advantageous to use a larger fraction of BOF slag in comparison to ladle furnace slag as per ton of steel at least a factor 5 more BOF slag is produced in comparison to ladle furnace slag. Preferably the ratio BOF slag : ladle furnace slag in the binder is larger than 1, more preferably the ratio BOF slag : ladle furnace slag in the binder is larger than 2.

The BOF slag fraction of the inorganic binder composition has a d_50 of maximum 50 µm, more preferably a d_50 of maximum 40 µm, more preferably a d_50 of maximum 30 µm, more preferably a d_50 of maximum 20 µm.

The inorganic binder composition can be combined with a flow improving agent. The flow improving agent can be present between 0.05 wt% and 2wt% of the inorganic binder composition.

The flow improving agent can be chosen from a list of conventional flow improvers preferably one of a naphthalene-based superplasticizer; a lignosulphonate; a protein, such as casein; a naphtalene sulphonate; a melamine-based superplasticizer; a polycarboxylic ether (PCE) or polyaromatic ether (PAE), a salt or derivative thereof; and mixtures thereof.

In order to facilitate a durable building product, the inorganic binder composition is combined with water.

Still preferably, the inorganic binder composition can be combined with aggregate to form a mortar or concrete.

A process to obtain the inorganic binder composition comprises the steps of providing a ladle furnace slag, providing a CaSO₄-source, providing a retarding compound, providing a BOF slag. The process comprises a step of mixing the ladle furnace slag, the CaSO₄-source, a retarding compound and a BOF with water.

As mentioned above, the present invention provides a process for producing said inorganic binder composition, comprising the steps of providing a ladle furnace slag, providing a CaSO₄-source, providing a retarding compound, providing a basic oxygen furnace slag, homogeneously mixing the ladle furnace slag, the CaSO₄-source, the retarding compound and the basic oxygen furnace slag.

Finally, the present invention provides for the use of that inorganic binder composition, comprising combining the binder composition with water and optionally aggregates to form a building product.

### Experimental methods

- The chemistry of the inorganic compounds is quantified via X-ray fluorescence (XRF) using the XRF S4 Pioneer (Bruker).
- The mineralogy is of the inorganic compounds is determined via X-ray diffraction (XRD) using the D8 Advance (Bruker). The quantification is done using the Rietveld refinement method.
- The reported loss-on-ignition (LOI) is determined on dry, de-metallized material at 950°C.
- The reported values for particle size distribution (PSD) are based on measurements using the LS 13 320 Particle Size Analyzer (Beckman-Coulter).
- Compressive strength of the binder is measured on mortar level using beams produced in line with the EN 196-1 procedure with the composition as given in Tables mentioned below.
- The setting time is measured using the Vicat-needle test where the procedure is followed in line with the EN 196-3.
- The slump flow is measured by filling a tube with diameter of 2cm and height of 5cm with the mixed mortar composition. The diameter of the mortar after lifting the tube is taken as characteristic value for the flow.
- The accelerated carbonation test is carried out according to the procedure set forward in EN_13295 in an elevated CO₂-concentration of 1%. The reported values are the depth of the carbonation front till where the phenolphthalein-indicator changes colour from pink to transparent.

### Experimental Results

The invention will be now described in more details with reference to the following examples, whose purpose is merely illustrative and not intended to limit the scope of the invention. In the Tables and the Figures, "D" stands for days, and the units are given in grams or wt%, respectively.

**Table 1: Ladle slag chemistry**

| **Compound** | **Ladle Slag 1 (wt%)** | **Ladle Slag 2 (wt%)** |
|---|---|---|
| CaO | 41.1 | 44.2 |
| Al2O3 | 23.2 | 25.8 |
| SiO2 | 8.5 | 11.5 |
| MgO | 6.4 | 6.7 |
| Fe2O3 | 9.8 | 4.8 |
| MnO | 2.5 | 1.9 |
| TiO2 | 0.5 | 0.4 |
| V2O3 | 0.3 | 0.3 |
| Others | 2.7 | 1.9 |
| *Loss on Ignition* | 4.4 | 2.5 |

**Table 2: Mineralogy of used ladle slags**

| **Mineral** | **Ladle Slag 1 (wt%)** | **Ladle Slag 2 (wt%)** |
|---|---|---|
| Quartz (SiO2) | 5 | |
| Di-calcium silicate (C2S) | 26 | 26 |
| Garnet (X3Z2(SiO4)3) | 24 | 9 |
| Melilite group ((Ca,Na)₂(Al,Mg,Fe²⁺)(Si,Al)₂O₇) | 6 | 38 |
| Calcite (CaCO3) | 2 | |
| Periclase (MgO) | 7 | |
| Mayenite (Ca₁₂Al₁₄O₃₃ - C12A7) | 13 | 21 |
| Srebrodolskite ( Ca₂Fe³⁺₂O₅) | 7 | |
| Wuestite (FeO) | 6 | |
| Hematite (Fe₂O₃) | 4 | |
| CaAl2O4 (CA) | | |
| Ca3Al2O6 (C3A) | | 4 |
| Brownmillerite. (Ca2(AI,Fe)2O5 - C4AF) | | |
| Amorphous | | 2 |
| Others | 4 | |

**Table 3: BOF slag chemistry**

| **Compound** | **BOF Slag 1 (wt%)** | **BOF Slag 2 (wt%)** |
|---|---|---|
| CaO | 52 | 48,2 |
| Al2O3 | 3,5 | 2,4 |
| SiO2 | 11 | 11,2 |
| MgO | 2 | 2,2 |
| Fe2O3 | 20,6 | 24,5 |
| MnO | 2,2 | 2,6 |
| TiO2 | 0,9 | 0,8 |
| V2O3 | 0,4 | 0,7 |
| P2O5 | 1,9 | 1,8 |
| Cr2O3 | 0,2 | 0,2 |
| Others | 0,5 | 0,6 |
| *Loss on Ignition* | 4,8 | 4,8 |

**Table 4: Mineralogy of used BOF slags**

| **Mineral** | **BOF Slag 1 (wt%)** | **BOF Slag 2 (wt%)** |
|---|---|---|
| Quartz (SiO2) | 0,4 | 0,3 |
| Di-calcium silicate (C2S) | 30,9 | 34,5 |
| Calcite (CaCO3) | 4,6 | 6 |
| Brownmillerite/Srebrodolskite (Ca₂(Fe³⁺,Al)₂O₅) | 16,5 | 17,9 |
| Wuestite (FeO) | 15 | 16,7 |
| Magnetite (Fe₃O₄) | 2,7 | 2,7 |
| Lime (CaO) | 2,5 | 2,9 |
| Portlandite (Ca(OH)2) | 12,8 | 3,7 |
| Amorphous | 14,6 | 15,3 |

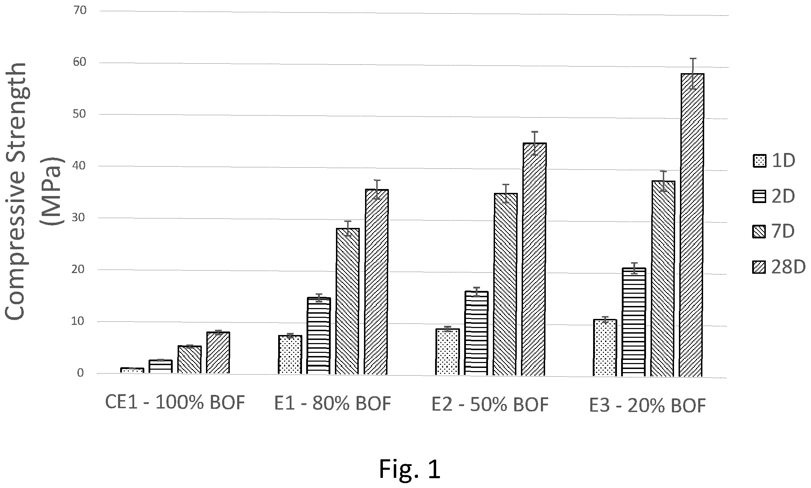

In Table 5, the compositions are given for the examples with varying BOF slag content. The counter example, CE1, is added to contrast the inventive compositions E1-E3. The corresponding compressive strength is shown in Figure 1 for these samples. Surprisingly the addition of a fraction of ladle furnace slag in combination with CaSO₄ strongly increases the strength at all ageing stages but in particular the early strength is drastically improved. It allows the demoulding of the construction material in the time span of 1 day which is not possible for the case with only BOF slag.

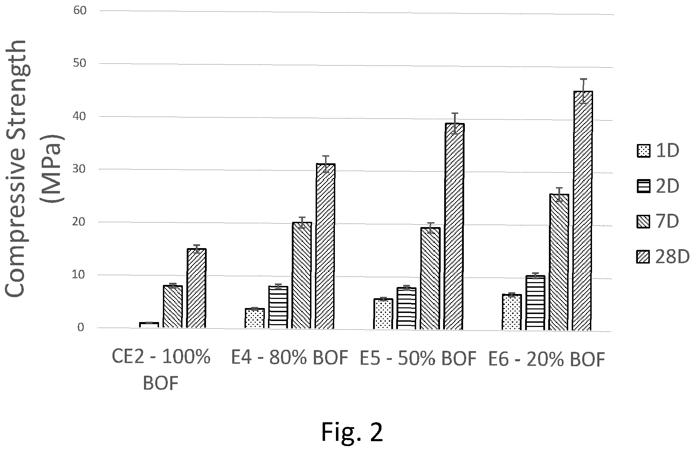

In Table 6, the compositions are given for an alternative embodiment of the invention with varying BOF slag. The counter example, CE2, is added to contrast the inventive compositions E4-E6. The corresponding compressive strength is shown in Figure 2 for these samples. It has been observed that also for these combinations, the desired compressive strength profile is obtained whereas for the counterexample low early and late strengths are measured.

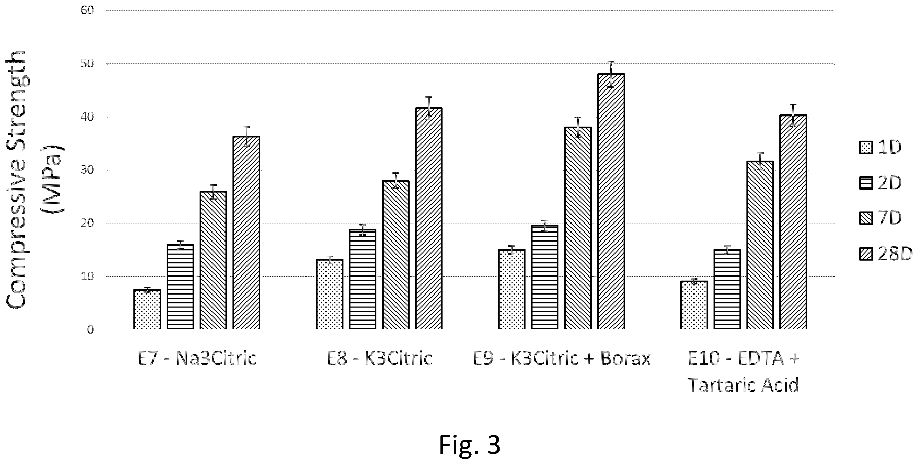

In Table 7, examples are given for 80 wt% BOF slag with different retarders. The corresponding compressive strength is given in Figure 3. It can be notices that various retarders or retarder combinations provided an unexpected strength profile for these high BOF slag contents.

In Table 8, examples are given for 20 wt% and 40 wt% BOF slag in combination with the ladle furnace slag binder. The counter example is added to demonstrate the effect of BOF slag addition. The advantages effect of the BOF slag addition is seen in Table 9 where the depth of COz penetration is shown for these samples. The addition of BOF results in a lower COz penetration, hence a better pH buffer and therefor improved stability of the ettringite phases as well as better protection for the steel reinforcement.

**Table 5: Counter example and example compositions with varying BOF content for the retarder combination tartaric acid and EDTA for the w/b = 0.22.**

| | **CE1 - 100% BOF** | **E1 - 80% BOF** | **E2 - 50% BOF** | **E3 - 20% BOF** |
|---|---|---|---|---|
| Ladle Slag 1 | 0 | 150 | 375 | 600 |
| CaSO4 | 0 | 50 | 125 | 200 |
| Tartaric Acid | 2,5 | 2,5 | 2,5 | 2,5 |
| EDTA | 5 | 5 | 5 | 5 |
| BOF slag 1 | 1000 | 800 | 500 | 200 |
| Water | 220 | 220 | 220 | 220 |
| Sand | 1000 | 1000 | 1000 | 1000 |

**Table 6: Counter example and example compositions with varying BOF content with trisodium citrate as retarder and w/b = 0.30.**

| | **CE2 - 100% BOF** | **E4 - 80% BOF** | **E5 - 50% BOF** | **E6 - 20% BOF** |
|---|---|---|---|---|
| Ladle Slag 2 | 0 | 140 | 350 | 560 |
| CaSO4.2H2O | 0 | 60 | 150 | 240 |
| Tri-sodium citrate | 5 | 5 | 5 | 5 |
| BOF slag 1 | 1000 | 800 | 500 | 200 |
| Water | 300 | 300 | 300 | 300 |
| Sand | 1000 | 1000 | 1000 | 1000 |

**Table 7: Examples for 80 wt% BOF slag with different retarders.**

| | **E7 - Na₃ citr.** | **E8 - K₃ citr.** | **E9 - K₃ citr. + Borax** | **E10 - EDTA + Tart. Acid** |
|---|---|---|---|---|
| Ladle Slag 1 | 150 | 150 | 150 | 150 |
| CaSO4 | 50 | 50 | 50 | 50 |
| Tri-sodium citrate | 10 | 0 | 0 | 0 |
| Tri-potasium citrate | 0 | 10 | 10 | 0 |
| Tartaric Acid | 0 | 0 | 0 | 2 |
| Borax | 0 | 0 | 5 | 0 |
| EDTA | 0 | 0 | 0 | 10 |
| BOF slag 2 | 800 | 800 | 800 | 800 |
| Water | 200 | 200 | 200 | 200 |
| Sand | 1000 | 1000 | 1000 | 1000 |

**Table 8: Counter example and examples for 20 wt% and 40 wt% BOF slag.**

| | **CE3** - **0% BOF** | **E11 - 20% BOF** | **E12** - **40% BOF** |
|---|---|---|---|
| Ladle Slag 1 | 450 | 450 | 450 |
| CaSO₄ | 150 | 150 | 150 |
| Tri-potasium citrate | 10 | 10 | 10 |
| BOF slag 1 | 0 | 200 | 400 |
| Limestone filler | 400 | 200 | 0 |
| Water | 200 | 200 | 200 |
| Sand | 1000 | 1000 | 1000 |

**Table 9 -The depth of carbonation of the mortar compositions in Table 8. The samples are exposed to an elevated CO₂-concentration of 1%, 60% relative humidity and 20°C. The exposure time is expressed in days (D).**

| **Carbonation time** | **0 D** | **14 D** | **28 D** | **42 D** | **56 D** |
|---|---|---|---|---|---|
| CE3 - 0% BOF | 2,31 | 5,77 | 7,79 | 8,25 | 9,63 |
| E11 - 20% BOF | 2,22 | 5,43 | 6,54 | 6,97 | 7,96 |
| E12 - 40% BOF | 2,12 | 4,66 | 5,08 | 5,81 | 6,58 |

## Claims

1. An inorganic binder composition comprising:
(A) a ladle furnace slag chemically comprising: at least 25 wt% of CaO, at least 10 wt% of Al₂O₃, and a maximum of 25 wt% of SiO₂,
(B) a CaSO₄-source, different from (A),
(C) a retarding compound, different from (A) and (B),
(D) a basic oxygen furnace slag chemically comprising: at least 25 wt% of CaO, 5 to 25 wt% of SiO₂, at least 10 wt% of iron oxide, calculated as Fe₂O₃, and a maximum of 10 wt% of Al₂O₃, different than (A), (B) and (C),
wherein:
- (A) the ladle furnace slag is at least 5 wt% of the inorganic binder composition, being the sum of (A)+ (B)+ (C) + (D),
- the weight ratio between (A) the ladle furnace slag and (B) the CaSO₄-source is in the range from 1:3 to 19:1,
- the weight ratio between the sum of the ladle furnace slag, the CaSO₄-source and the basic oxygen furnace slag ((A) + (B) + (D)) and the retarding compound (C) is at least 19:1,
- the basic oxygen furnace slag (D) is present as at least 10 wt% of the binder composition and at a maximum of 90 wt%.

2. Inorganic binder composition according to claim 1, wherein the ladle furnace slag comprises less than 70 wt% of amorphous constituents.

3. Inorganic binder composition according to any of the preceding claims, wherein the ladle furnace slag comprises at least one of the following CaO-Al₂O₃ mineralogic phases:
• C3A: 3CaO.Al₂O₃,
• C12A7: 12CaO.7Al₂O₃,
• CA: CaO.Al₂O₃,
• CA2: CaO.2Al₂O₃,
• CA6: CaO.6Al₂O₃.

4. Inorganic binder composition according to any of the preceding claims, wherein the ladle furnace slag comprises at least 5 wt% of CaO-Al₂O₃ phases.

5. Inorganic binder composition according to any of the preceding claims, wherein said ladle furnace slag having a weight ratio of Al₂O₃/CaO of at least 0.25.

6. Inorganic binder composition according to any of the preceding claims, wherein the fraction of basic oxygen furnace slag is in the range of 50 to 90 wt%.

7. Inorganic binder composition according to any of the preceding claims, additionally comprising a flow improving agent which comprises one or more of the following:
• A naphthalene-based superplasticizer
• a lignosulphonate
• a protein
• a melamine-based superplasticizer
• a polycarboxylic ether
• A polyacrylic ether
or a salt or derivative of one of the above-mentioned compounds, and mixtures thereof.

8. Inorganic binder composition according to any of the preceding claims, wherein the CaSO₄-source comprises at least one of the following:
- CaSO₄ (anhydrite),
- alfa-CaSO₄.½H₂O (alfa hemi-hydrate),
- beta-CaSO₄.½H₂O (beta hemi-hydrate),
- CaS04.2H20 (gypsum),
- phosphogypsum,
- SOs-scrubber gypsum
- a blend material containing CaO or Ca(OH)₂ and Na₂SO₄.

9. Inorganic binder composition according to any of the preceding claims, wherein the retarding compound comprises one or more of the following:
- a boron-containing salt,
- a carboxylic acid or a salt thereof,
- a phosphonate,
- a sugar,
- an amine,
- alkali carbonates,
- a phosphate.

10. Inorganic binder composition according to claim 9, wherein the carboxylic acid is one of the following: citric acid, tartaric acid, maleic acid, oxalic acid, ethylenediamine tetraacetic acid or gluconic acid.

11. Inorganic binder composition according to any of the preceding claims, wherein said ladle furnace slag has a d_50 value smaller than 50 µm

12. Inorganic binder composition according to any of the preceding claims, wherein said basic oxygen furnace slag has a d_50 of maximum 50 µm.

13. Inorganic binder composition according to any of the preceding claims, which does not contain ordinary Portland cement, calcium aluminate cement or calcium sulfo-aluminate cement

14. Inorganic binder composition according to any of the preceding claims, further comprising one or more of the following:
• metallurgical residues,
• non-ferrous metal slag,
• blast furnace slag,
• clays,
• calcined clays,
• glass,
• fillers such as ground limestone, dolomite or quartz.

15. A process for producing an inorganic binder composition according to any of the preceding claims, comprising the steps of:
- Providing a ladle furnace slag,
- Providing a CaSO₄-source,
- Providing a retarding compound,
- Providing a basic oxygen furnace slag,
- Homogeneously mixing the ladle furnace slag, the CaSO₄-source, the retarding compound and the basic oxygen furnace slag.

16. Use of an inorganic binder composition according to claims 1 to 14, comprising combining the binder composition with water and optionally aggregates to form a building product.
